# EUROPEAN PATENT SPECIFICATION

(11) **EP 0 484 994 B1**
(45) Date of publication and mention of the grant of the patent: **03.01.1996**
(21) Application number: 91202686.1
(22) Date of filing: 17.10.1991
(51) Int. Cl.: G02B 6/38, G02B 6/25, C03B 37/15

(54) **Terminal for optical fibre**
Endstück für optische Faser
Terminal pour fibre optique

(30) Priority: 09.11.1990 US 611253
(43) Date of publication of application: 13.05.1992
(73) Proprietor: GENERAL MOTORS CORPORATION, Detroit Michigan 48202 (US)
(72) Inventor: Tackett, Timothy Neal, Warren, Ohio 44484 (US); Jennings, Kurt Lynn, Niles, Ohio 44446 (US)
(74) Representative: Denton, Michael John

(56) References cited:
- EP-A- 0 104 513
- EP-A- 0 152 225
- DE-A- 2 516 858
- US-A- 4 191 447

## Description

This invention relates to a terminal for an optical fibre and to a method of fitting an optical fibre to a terminal.

Optical fibres used for data transmission are most often supplied in cable form in which the cable comprises a fibre core of glass or plastics material, a thin cladding, and a protective jacket which can include strengthening members. Connecting the fibre optic cable to another device, such as an electro-optic device or another cable, is generally accomplished by one of two methods.

In one method, bare fibre ends are placed against the device without any added terminal. This results in a very delicate connection and is subject to damage of the connection, with attendant signal degradation across the interface.

Another method uses a terminal on the fibre end. This arrangement can be very durable and can provide a more reliable connection in systems requiring quick connection and disconnection to devices or other cables. The fitting of a terminal to the cable is often performed as a field operation, such as when installing data transmission systems, such as computer LANs (Local Area Networks).

To provide an optically efficient interface between an optical fibre and another device by this second method, it is necessary to mount the fibre end in a suitable terminal fitting in a manner that will provide good signal transmission across the interface. This requires that the terminal fitting properly aligns the fibre with the terminal of the other device. Such alignment is provided by mating faces formed on the terminal fittings of the fibre and the device.

An optically efficient interface also requires that the fibre has a flat and smooth end surface. Two methods of forming this end surface on plastic optic fibres during their fitting to a terminal are in general use. In both methods, the fibre end is exposed and a terminal is clamped or crimped onto the cable jacket, or the bare fibre is adhered to the terminal by any suitable epoxy resin or cement. The terminal can be a ferrule or a multiple fibre connector or combined fibre and electrical connector.

In one method, the fibre end is cut to form a generally flat surface near the end face of the terminal fitting. This surface is then polished to a predetermined degree of smoothness to eliminate pits which adversely affect light transmission. This polishing method is a laborious, exacting and thus costly, process which requires repeated visual inspection to determine when the predetermined degree of smoothness is achieved.

Another method involves stripping the cable jacket, inserting the fibre into the terminal fitting so that it projects beyond an exit aperture of the end face of the fitting. The fibre end is then cut a predetermined distance from the terminal end face and a smooth hot plate is brought into contact with the fibre end. Heat is applied to the plate to melt the fibre, the plate is then allowed to cool, still in contact with the fibre so that the fibre cools and solidifies, and the plate is then removed. This "hot plate" method leaves the fibre end with the same smooth, flat surface as the plate.

One problem with the hot plate method is disposal of the excess reflowed fibre material which remains after melting in a manner that does not adversely affect light transmission through the terminal. Several methods are in current usage. In one, the excess reflowed material resulting from the melting is formed into a smooth-surfaced flat disc lying on the fitting's end face. While this provides the requisite smooth, flat surface, this disc protrudes from the end face and is unbounded, which allows light leakage and degrades light transmission to an unacceptable degree.

Another problem is caused by the thickness of this disc. Since this thickness is uncontrolled, it prevents precise mating of the terminal with another device. This affects alignment of the fibre with the other device and light transmission across the interface.

A further problem is contamination of the fibre material by the cladding material, caused by their intermixing during melting. This further degrades light transmission.

Two design modifications of the end fitting have been made in an effort to overcome the problems caused by the protruding, unbounded disc. In one, the thickness of the disc is reduced by flaring the exit aperture so that it has a frusto-conical shape. If the excess reflowed material exceeds the capacity of this slight enlargement, a protruding disc is formed, with the same problems just described.

On the other hand, if melting produces insufficient excess reflowed material to fill completely the flared enlargement, the hot plate will make incomplete contact and form a pitted fibre end surface, resulting in seriously degraded light transmission. In either event, the cladding material will again contaminate the core material during melting, with the resulting adverse consequences noted above.

In another modification, the protruding disc is eliminated by ensuring that it sits below the surface of the end face of the terminal. The exit aperture is countersunk to form an enlarged cylindrical recess in the end face. Upon melting, the disc is formed completely within the recess. A smooth surface may be formed by the hot plate, regardless of the quantity of the excess reflowed material. The mating and alignment problems caused by a protruding disc lying above the terminal face of the fitting are eliminated.

However, a shortage of material (i.e. insufficient to fill the recess) will result in an irregular boundary, resulting in signal degradation. Although the enlarged recess prevents formation of a protrusion, it still can cause light leakage due to the lack of a defined boundary if the reflowed plastic material does not reach the recess walls.

The hot plate melting results in a gap between the melted fibre end surface (top of the disc) and the point of fibre entrance to the recess if the recess is not exactly filled, which, in practise, is never the case. In order to guarantee that the disc does not protrude above the terminal face, this recess must be sufficiently voluminous to accommodate the largest quantity of excess reflowed material that could occur. Thus the gap is inevitable. In any event the ideal light guiding properties of the fibre are lost at the entrance to the recess where the irregular disc of melted material begins.

When the fitting is connected to another device, the gap introduces a new source of light leakage and signal degradation. Also, the problem of contamination by the intermixed cladding material persists.

EP-A-O,152,225 discloses a terminal for an optical fibre in which a body of the terminal has a bore extending therethrough for receiving an optical fibre, the bore including an exit aperture formed in an end face of the body. The end region of the bore leading to the exit aperture may be flared outwardly to provide an enlarged mouth or the end region of the bore leading to the exit aperture may be formed at its inner periphery with a semi-circular recess. In the process of forming the end region of the optical fibre which has been positioned within the bore, hot melting of the end region of the fibre causes fibre material to flow to take the shape of the flared, enlarged mouth or the semi-circular recess, and to seal the fibre relative to the terminal.

All of the currently-used methods and apparatus for terminating an optical fibre have inherent physical problems that require extremely tight processing tolerances to minimise degradation of light transmission across the terminal interface in a connection. A slight variance of excess melted fibre material will cause light leakage that results in signal degradation and consequent inferior light transmission at the terminal interface.

The present invention seeks to provide an improved terminal for an optical fibre and method for fitting an optical fibre to a terminal.

According to an aspect of the present invention, there is provided a terminal for an optical fibre as specified in claim 1.

Such a terminal can eliminate the causes of light leakage characteristic of currently-used terminals, and can enable hot plate melting to provide a fibre end surface substantially coplanar with the fitting end face. Such a terminal can also permit relaxation of processing tolerances, while providing optimum light coupling and transmission properties.

Such a terminal can also eliminate light loss due to unbounded protrusions extending above the terminal end face, by subsurface gaps, by misalignment, and by contamination of the fibre core material by cladding material.

According to another aspect of the present invention, there is provided a fibre optic connector as defined in claim 8.

According to another aspect of the present invention, there is provided a method of fitting an optical fibre to a terminal as defined in claim 9.

An embodiment of the present invention is described below, by way of example only, with reference to the accompanying drawing, in which:
Figure 1 is a perspective view of a terminal fitting of an embodiment of fibre optic terminal;
Figure 2 is a partial sectional view taken along line 2-2 of Figure 1 and illustrating a fibre inserted through the fitting of Figure 1;
Figure 3 is a view similar to Figure 2, illustrating the melting of the fibre end during the formation of the fibre optic terminal;
Figure 4 is a view similar to Figure 3, illustrating the terminal after formation;
Figure 5 is an enlarged sectional view of the optical fibre after formation of the terminal; and
Figure 6 is a longitudinal sectional view of two fibre optic terminals connected to one another.

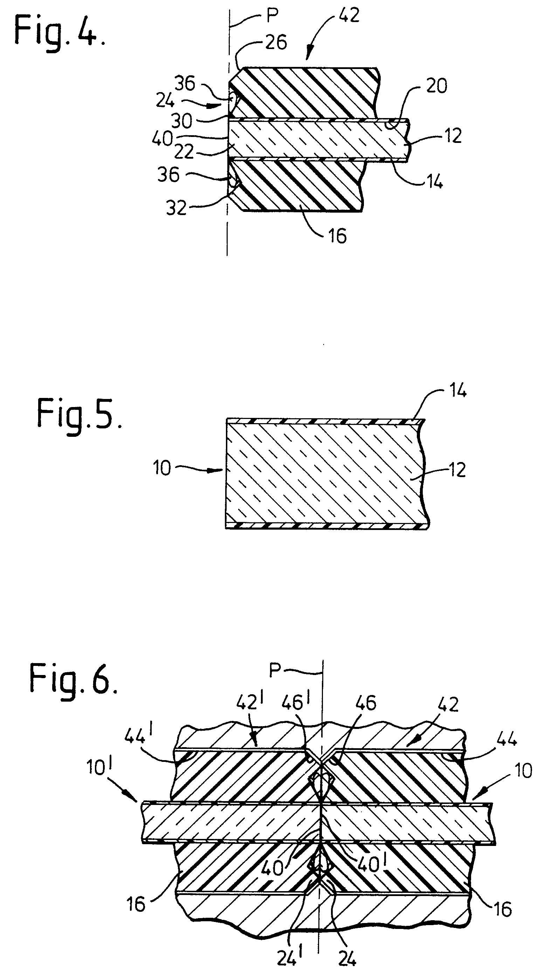

Referring to Figure 5 of the drawing, an optical fibre 10 comprises a core 12 of plastics material, such as polymethylmethacrylate, and a cladding 14 of a suitable material, such as a fluoropolymer. The fibre core 12 may be of any suitable diameter. As an example, the fibre core 12 may have a diameter of the order of 1mm, while the cladding thickness may be of the order of 20 microns.

Both core and cladding are conventionally part of a fibre optic cable (not shown) that includes one or more fibres encased in a protective jacket (not shown), which is conventionally stripped for connection of the cable 10 to another cable or other device. Fibre optic cables of this type are useful for data transmission and must be prepared for connection to other cables or to electro-optical devices.

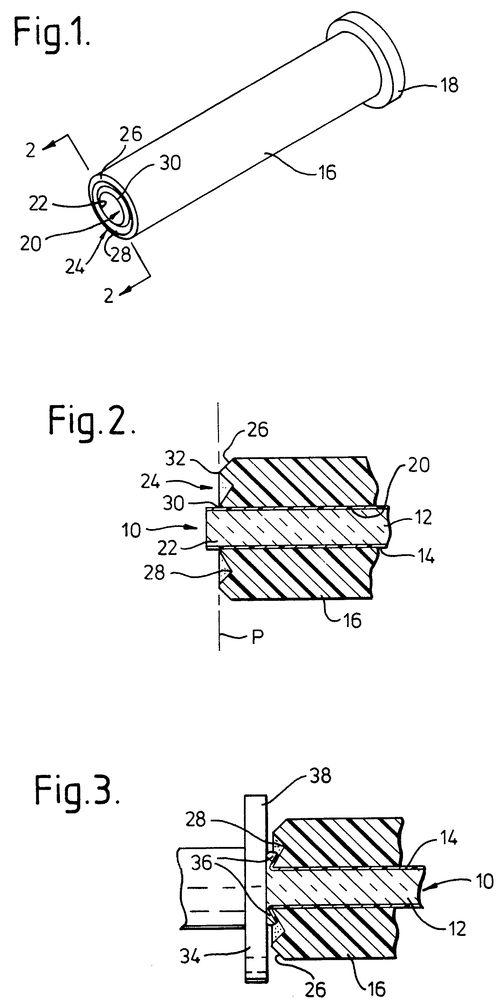

Figure 1 shows an elongated fitting, or ferrule 16 having a base flange 18 and a longitudinal bore 20 for receiving a fibre 10. Ferrule 16 is preferably made of Hytrel® another polyester copolymer. Bore 20 terminates in an exit aperture 22 formed in the terminal face 24 of ferrule 16. Terminal face 24 is bounded by a peripheral chamfer 26 and includes an annular groove 28 intermediate the exit aperture 22 and the chamfer 26.

As illustrated in Figure 2, the axially outermost portions of terminal face 24, which separate exit aperture 22 from groove 28 and groove 28 from chamfer 26, lie in a plane denoted "P". In this manner, groove 28 is isolated from exit aperture 22 by a land, or ring 30, and from chamfer 26 by a coplanar land 32.

Formation of the terminal will now be described, with reference to Figures 1, 2, 3 and 4. As shown in Figure 2, fibre 10 is projected through bore 20 and out of exit aperture 22, where it is cut a predetermined distance beyond terminal face 24. This distance should be sufficient to assure that a complete cross-section of core material 12 extends beyond terminal face 24.

In addition, this distance should be such as to assure that the volume of fibre material (including both core and cladding material) is less than the volume of groove 28 lying below plane "P" of terminal face 24 (i.e. the subsurface volume of groove 28). In practice the "predetermined" distance will be a range of distances dependent on the tooling or fixturing and tolerances utilized in a particular field termination procedure, and of course the size of the groove 28. In any event, the groove subsurface volume should always exceed the projecting fibre volume.

As illustrated in Figure 3, a hot plate 34 is brought into contact with the end of fibre 10 to cause the fibre 10 to melt. Plate 34 has a flat, smooth surface 38 and is heated to a temperature that is high enough to melt fibre 10, but is lower than the melting temperature of ferrule 16. The hot plate 34 advances as the fibre end begins to melt.

This process continues (actually a very short time) until hot plate 34 comes into abutment with the terminal face rings 30 and 32. At this time, plate 34 is cooled, allowing the end of fibre 10 to solidify. Then plate 34 is removed, leaving the fibre with a flat, smooth surface 40 formed by plate surface 38. As shown in Figure 4, fibre end surface 40 lies in plane "P", coplanar with terminal face rings 30 and 32.

During this process, the excess reflowed fibre material, indicated at 36, is forced radially outwardly and into groove 28, as shown. This assures that the cladding material 14 does not contaminate the flat, smooth end surface 40 of fibre core material, which is the same diameter as fibre 10 and is coplanar with ferrule terminal face 22.

Since the plate 34 engages both rings 30 and 32 and the rings are coplanar, substantially all of the excess reflowed fibre material 36 is forced to flow into groove 28, subsurface of the terminal face plane "P", where it is trapped. Thus, as mentioned above, it is critical in this embodiment that the subsurface volume of groove 28 exceed the volume of excess reflowed fibre material 36.

The width of rings 30 and 32 need only be sufficient to assure isolation of groove 28 from exit aperture 22 and chamfer 26 and to enable replication of this relationship during mass production of the ferrules. Ideally, the ring 30 between the groove and exit aperture should be as narrow as possible to facilitate the flow of excess fibre material into the groove. In the preferred embodiment, the rings 30 and 32 can be thought of as being substantially blade-like in shape.

This relationship assures isolation of material 36 from fibre end surface 40, preventing pits, formation of a flat disc at the fibre end or contamination from the cladding material 14. Also, by collecting all the excess material 36 into groove 28, none of it spills out onto chamfer 26 to alter its profile.

Figure 6 illustrates the coupling of a pair of like terminals 42, 42' formed in the manner shown in Figures 2 to 4. Terminals 42, 42' are inserted into opposite ends of a receptacle having a bore 44 so that their terminal faces 24, 24' come into contact with one another. Alignment of the respective fibres 10, 10' is maintained by the abutment of the terminal chamfers 26, 26' with respective surfaces 46, 46' formed within the bore 44. The flush engagement and axial alignment is possible due to the provision of the flush fibre ends 40 and the uncontaminated terminal chamfer 26.

By utilizing ferrule 16 to form a terminal 42 by the disclosed process, this embodiment can provide an inexpensive fibre optic terminal virtually free of the contamination, light loss or misalignment problems.

## Claims

1. A terminal for an optical fibre, comprising a body (16), a bore (20) extending through the body adapted to receive an optical fibre therein, the bore including an exit aperture (22) formed in an end face (24) of the body, characterised in that the end face is formed with a recess (28) surrounding the exit aperture and separated from the exit aperture by a portion (30) of the end face of the body.

2. A terminal according to claim 1, wherein the recess (28) is an annular groove disposed substantially coaxially around the exit aperture (22).

3. A terminal according to claim 2, wherein the groove (28) has a substantially V-shaped cross-section.

4. A terminal according to any one of claims 1 to 3, wherein the portion (30) separating the recess (28) from the exit aperture (22) is substantially blade-like in shape.

5. A terminal according to any preceding claim, wherein the end face (24) of the body (16) comprises an annular chamfer (26) formed around the periphery thereof and adapted, in use, to facilitate alignment of a fibre fitted therein with another fibre or other device.

6. A terminal according to any preceding claim, wherein the recess (28) is adapted to receive substantially all excess fibre material produced during preparation of the fibre end surface.

7. A terminal according to any preceding claim, wherein the end face (24) of the body (16) is substantially planar.

8. A fibre optic connector comprising a plastic optical fibre including a substantially planar end face formed by hot plate melting and a terminal according to any preceding claim.

9. A method of fitting a plastic optical fibre to a terminal, which terminal comprises a body (16) including an end face (24), a bore (20) passing through the body (16) and terminating in an exit aperture (22) formed in the end face; the method comprising the steps of inserting a plastic fibre (10) through the bore such that an end of the plastic fibre extends beyond the end face, and melting and forming the plastic fibre end such that the surface of the prepared plastic fibre is substantially co-planar with the end face; characterised in that the excess fibre material arising from the melting and forming of the fibre end is received in a recess (28) surrounding the exit aperture and separated from the exit aperture by a portion (30) of the end face of the body.

## Patentansprüche

1. Ein Anschluß für eine optische Faser mit einem Körper (16), einer Bohrung (20), die sich durch den Körper erstreckt und ausgelegt ist, um darin eine optische Faser aufzunehmen, wobei die Bohrung eine Ausgangsöffnung (22) umfaßt, die in einer Endfläche (24) des Körpers ausgebildet ist,
dadurch gekennzeichnet, daß die Endfläche mit einer Ausnehmung (28) ausgebildet ist, die die Ausgangsöffnung umgibt und von der Ausgangsöffnung durch einen Teil (30) der Endfläche des Körpers getrennt ist.

2. Ein Anschluß nach Anspruch 1, worin die Ausnehmung (28) eine ringförmige Nut ist, die im wesentlichen koaxial um die Ausgangsöffnung (22) herum angeordnet ist.

3. Ein Anschluß nach Anspruch 2, worin die Nut (28) einen im wesentlichen V-förmigen Querschnitt aufweist.

4. Ein Anschluß nach einem der Ansprüche 1 bis 3, worin der Teil (30), der die Ausnehmung (28) von der Ausgangsöffnung (22) trennt, eine im wesentlichen schneidenartige Form aufweist.

5. Ein Anschluß nach einem der vorhergehenden Ansprüche, worin die Endfläche (24) des Körpers (16) eine ringförmige Abschrägung (26) umfaßt, die um deren Peripherie herum gebildet und ausgelegt ist, um im Gebrauch die Ausrichtung einer darin eingepaßten Faser zu einer anderen Faser oder einer anderen Vorrichtung zu erleichtern.

6. Ein Anschluß nach einem der vorhergehenden Ansprüche, worin die Ausnehmung (28) ausgelegt ist, um im wesentlichen alles überschüssige Fasermaterial, das während der Bearbeitung der Faserendoberfläche erzeugt wird, aufzunehmen.

7. Ein Anschluß nach einem der vorhergehenden Ansprüche, worin die Endfläche (24) des Körpers (16) im wesentlichen planar ist.

8. Ein Faseroptikverbinder mit einer optischen Faser aus Kunststoff, die eine im wesentlichen planare Endfläche, die durch Heißplattenschmelzen gebildet ist, und einen Anschluß nach einem der vorhergehenden Ansprüche aufweist.

9. Ein Verfahren zum Anbringen einer optischen Faser aus Kunststoff an einem Anschluß, wobei der Anschluß einen Körper (16) mit einer Endfläche (24) und einer Bohrung (20) umfaßt, die sich durch den Körper (16) erstreckt und in einer Ausgangsöffnung (22) endet, die in der Endfläche ausgebildet ist; und das Verfahren die Schritte umfaßt, daß eine Kunststoffaser (10) durch die Bohrung eingesetzt wird, so daß ein Ende der Kunststoffaser sich über die Endfläche hinaus erstreckt, und daß das Kunststoffaserende so geschmolzen und geformt wird, daß die Oberfläche der bearbeiteten Kunststoffaser im wesentlichen koplanar zur Endfläche liegt;
dadurch gekennzeichnet, daß das überschüssige Fasermaterial, das vom Schmelzen und Formen des Faserendes herrührt, in einer Ausnehmung (28) aufgenommen wird, die die Ausgangsöffnung umgibt und von der Ausgangsöffnung durch einen Teil (30) der Endfläche des Körpers getrennt ist.

## Revendications

1. Borne pour une fibre optique, comprenant un corps (16), un perçage (20) traversant le corps et apte à loger une fibre optique, le perçage comprenant une ouverture de sortie (22) aménagée dans une face d'extrémité (24) du corps, caractérisée en ce que la face d'extrémité est pourvue d'un renfoncement (28) entourant l'ouverture de sortie et séparée de l'ouverture de sortie par une partie (30) de la face d'extrémité du corps.

2. Borne selon la revendication 1, dans laquelle le renfoncement (28) est une gorge annulaire disposée essentiellement coaxialement autour de l'ouverture de sortie (22).

3. Borne selon la revendication 2, dans laquelle la gorge annulaire (28) possède une section transversale essentiellement en forme de V.

4. Borne selon l'une quelconque des revendications 1 à 3, dans laquelle la partie (30) séparant le renfoncement (28) de l'ouverture de sortie (22) possède essentiellement la forme d'une lame.

5. Borne selon l'une quelconque des revendications précédentes, dans laquelle la face d'extrémité (24) du corps (16) comprend un chanfrein annulaire (26) formé autour de sa périphérie et apte, en cours d'utilisation, à faciliter l'alignement d'une fibre insérée avec un autre fibre ou un autre dispositif.

6. Borne selon l'une quelconque des revendications précédentes, dans laquelle le renfoncement (28) est apte à recevoir essentiellement tout le matériau de fibre en excès produit pendant la préparation de la surface d'extrémité de la fibre.

7. Borne selon l'une quelconque des revendications précédentes, dans laquelle la face d'extrémité (24) du support (16) est essentiellement plane.

8. Connecteur de fibre optique comprenant une fibre optique plastique incluant une face d'extrémité essentiellement plane, formée par fusion d'une plaque chaude et une borne selon l'une quelconque des revendications précédentes.

9. Procédé pour insérer une fibre optique plastique dans une borne, laquelle borne comprend un corps (16) incluant une face d'extrémité (24), un perçage (20) traversant le corps (16) et se terminant par une ouverture de sortie (22) aménagée dans la face d'extrémité; le procédé comprenant les étapes consistant à insérer une fibre plastique (10) dans le perçage de telle sorte qu'une extrémité de la fibre plastique s'étend au-delà de la face d'extrémité, et faire fondre et conformer l'extrémité de la fibre plastique de manière que la surface de la fibre plastique préparée soit essentiellement coplanaire à la face d'extrémité; caractérisé en ce que le matériau formé de fibres en excès, que l'on obtient lors de la fusion et de la mise en forme de l'extrémité de la fibre, est logé dans un renfoncement (28) entourant l'ouverture de sortie et est séparé de l'ouverture de sortie par une partie (30) de la face d'extrémité du corps.
